(19) Europäisches Patentamt / European Patent Office / Office européen des brevets

(11) **EP 4 492 292 A1**

(12) **EUROPEAN PATENT APPLICATION**

(43) Date of publication:
**15.01.2025 Bulletin 2025/03**

(21) Application number: **24187009.6**

(22) Date of filing: **08.07.2024**

(51) International Patent Classification (IPC):
**G06N 3/0895** (2023.01)    **G06N 20/00** (2019.01)

(52) Cooperative Patent Classification (CPC):
**G06N 20/00; G06N 3/0895**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 GB 202310673**

(71) Applicant: **Nokia Technologies Oy 02610 Espoo (FI)**

(72) Inventors:
• **CHATTERJEE, Soumyajit**
  **Cambridge (GB)**
• **MALEKZADEH, Mohammad**
  **Cambridge (GB)**

(74) Representative: **Nokia EPO representatives Nokia Technologies Oy Karakaari 7 02610 Espoo (FI)**

(54) **MACHINE LEARNING MODEL DOMAIN ADAPTATION FOR TIME-SERIES DATA**

(57)    A process for labelling of a time-series of un-labelled data for self-supervised training of a machine learning by analyzing the time series of un-labelled data to identify transition points where there is a change, in the time series, of the un-labelled data that exceeds a defined threshold value, segmenting the time-series of un-labelled data into segments at the transition points, identify multiple features in the time-series of un-labelled data, and performing clustering of the identified features, segment-by-segment, to provide a label for a segment, segment-by-segment.

EP 4 492 292 A1

## Description

TECHNOLOGICAL FIELD

Examples of the disclosure relate to machine learning model domain adaptation for time-series data.

BACKGROUND

Machine learning models can usefully label data. However, domain (or distribution) shifts in the input data cause a shift in the data..

Different uncontrollable factors, such as change of hardware components, environmental conditions, human behavior, etc., contribute to domain (or distribution) shifts. Because of these shifts, performance can severely drop.

Existing solutions to the problem of domain shift usually consider approaches like transfer learning which retrains certain parts (like the last few layers) of the model in a supervised manner to adapt to data coming from the new domain during deployment. However, transfer learning solution is practically unfeasible to apply because: training the model may not be possible because of data scarcity, and there is a need for labelled data.

Unsupervised domain adaptation can overcome the need for labelled data. An adversarial domain discriminator is used to understand the shift that occurred between the source data with which the model was initially trained in the controlled setup and the shifted data obtained during deployment. However, access is required to the source data (i.e., the training-time data) to learn the shift. This is a very challenging requirement, particularly for edge-devices like smartphones which may have limited storage capacity and network bandwidth.

It would be desirable to provide for domain adaptation in a manner designed for time-series data and for deployment over resource constrained edge-devices.

BRIEF SUMMARY

According to various, but not necessarily all, examples there is provided an apparatus for labelling of a time-series of un-labelled data for self-supervised training of a machine learning model, the apparatus comprising means for:

(i) analyzing the time series of un-labelled data to identify transition points where there is a change, in the time series, of the un-labelled data that exceeds a defined threshold value;
(ii) segmenting the time-series of un-labelled data into segments at the transition points;
(iii) identify multiple features in the time-series of un-labelled data;
(iv) performing clustering of the identified features, segment-by-segment, to provide a label for a segment, segment-by-segment.

In some but not necessarily all examples, the apparatus is configured for labelling, under memory constraints, of a time-series of un-labelled data for self-supervised training of a machine learning model, further comprising means for: storing, in a memory, the time-series of un-labelled data and the labels labelling the segments.

In some but not necessarily all examples, the apparatus is configured to compensate for sensor domain shift during deployment.

In some but not necessarily all examples, the means for analyzing the time series of un-labelled data to identify transition points where there is a change, in the time series, of the un-labelled data that exceeds a defined threshold value further comprises means for:

sampling the time-series of un-labelled data to create a series of non-overlapping samples;
determining a statistical distribution for each sample;
comparing the statistical distribution of adjacent samples to identify as transition points where there is a change in the statistical distribution of adjacent samples that exceeds a defined threshold value.

In some but not necessarily all examples, the threshold value is a statistical measure of entropy for a multi-variable distribution.

In some but not necessarily all examples, the means for identifying multiple features in the time-series of un-labelled data further comprises means for converting the time series of un-labelled data to parameters and identifying the features using the parameters, wherein a feature is a discriminating collection of parameters.

In some but not necessarily all examples, the means for identifying the features using the parameters a feature further comprises means for identifying discrete clusters in a vector space spanned by the parameters as features.

In some but not necessarily all examples, the time-series of un-labelled data is data produced by one or more sensors and wherein the features are features configured, for the one or more sensors, to discriminate sensor data.

In some but not necessarily all examples, the apparatus comprises means for training a machine learning model using the segmented time-series of un-labelled data and the labels labelling the segments.

In some but not necessarily all examples, the apparatus comprises means for run-time re-tuning of the machine learning model without using source data used to originally train the machine learning model.

In some but not necessarily all examples, the machine learning model is a multi-task machine learning model trained to produce, from an input comprising the time-series of un-labelled data, two task outputs including an inference output and a re-training output that provides inference labels that label the input time-series of un-labelled data.

In some but not necessarily all examples, the apparatus comprises means for in deployment re-training of the machine learning model using a loss calculated using the generated labels labelling the segments of the time-series of un-labelled data and the inference labels labelling the time-series of un-labelled data.

In some but not necessarily all examples, the machine learning model is an artificial neural network (ANN) comprising one or more batch normalization layers, and wherein training the machine learning network comprises fixing parameters for at least one or more hidden layers of the ANN other than one or more first batch normalization layers of the machine learning model and training the one or more first batch normalization layers using the segmented time-series of un-labelled data and the labels labelling the segments.

In some but not necessarily all examples, the apparatus is configured to train affine parameters of the batch normalization layer using gradient descent.

In some but not necessarily all examples, the apparatus further comprises dynamic scheduling means for scheduling training a machine learning model using the labels. In some but not necessarily all examples, the apparatus is configured as a hand-portable apparatus.

According to various, but not necessarily all, examples there is provided an apparatus for labelling, under memory constraints, of a time-series of un-labelled data for self-supervised training of a machine learning model comprising means for:

　　(i) analyzing the time series of un-labelled data to identify transition points where there is a change, in the time series, of the un-labelled data that exceeds a defined threshold value;
　　(ii) segmenting the time-series of un-labelled data into segments at the transition points;
　　(iii)identify multiple features in the time-series of un-labelled data;
　　(iv) performing clustering of identified features, segment-by-segment, to provide a label for a segment, segment-by-segment;
　　(iv) storing, in a memory, the time-series of un-labelled data and the labels labelling the segments.

According to various, but not necessarily all, examples there is provided a method of labelling of a time-series of un-labelled data for self-supervised training of a machine learning model, the method comprising:

　　(i) analyzing the time series of un-labelled data to identify transition points where there is a change, in the time series, of the un-labelled data that exceeds a defined threshold value;
　　(ii) segmenting the time-series of un-labelled data into segments at the transition points;

　　(iii) identify multiple features in the time-series of un-labelled data;
　　(iv) performing clustering of the identified features, segment-by-segment, to provide a label for a segment, segment-by-segment.

According to various, but not necessarily all, examples there is provided a method of training of a machine learning model, the method comprising labelling of the time-series of un-labelled data for the self-supervised training of the machine learning model, wherein the labelling comprises:

　　(i) analyzing the time series of un-labelled data to identify transition points where there is a change, in the time series, of the un-labelled data that exceeds a defined threshold value;
　　(ii) segmenting the time-series of un-labelled data into segments at the transition points;
　　(iii) identify multiple features in the time-series of un-labelled data;
　　(iv) performing clustering of identified features, segment-by-segment, to provide a label for a segment, segment-by-segment.

According to various, but not necessarily all, examples there is provided an apparatus for labelling of a time-series of un-labelled data for self-supervised training of a machine learning model to de-noise the time-series of un-labelled sensor data, the apparatus comprising means for:

　　(i) analyzing the time series of un-labelled data to identify transition points where there is a change, in the time series, of the un-labelled data that exceeds a defined threshold value;
　　(ii) segmenting the time-series of un-labelled data into segments at the transition points;
　　(iii) identify multiple features in the time-series of un-labelled data;
　　(iv) performing clustering of identified features, segment-by-segment, to provide a label for a segment, segment-by-segment.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG 1 illustrates an example of an apparatus 100 for labelling of a time-series of un-labelled data 102 for supervised training of a machine learning model;
FIG 2 illustrates an example of method 200 for labelling of a time-series of un-labelled data 102 for supervised training of a machine learning model;
FIGs 3A, 3B, 3C illustrate stages in the processing of the time-series of un-labelled data 102;
FIG 4 illustrates an example of change-point detection;
FIG 5 illustrates a further example of the apparatus previously described;
FIG 6 illustrates an example of a sensor;
FIGs 7 & 9 illustrate examples of initial training of the machine learning model;
FIGs 8 & 10 to 12 illustrate examples of in-deployment re-training of the machine learning model;
FIG 13 illustrates an example of a controller suitable for the apparatus 100;
FIG 14 illustrates an example of a computer program suitable for controlling operation of the apparatus 100.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. 10) and a specific instance of the class (member of the set) can be referenced using the reference number with a numerical type subscript index (e.g. 10_1) and a non-specific instance of the class (member of the set) can be referenced using the reference number with a variable type subscript index (e.g. 10_i).

DETAILED DESCRIPTION

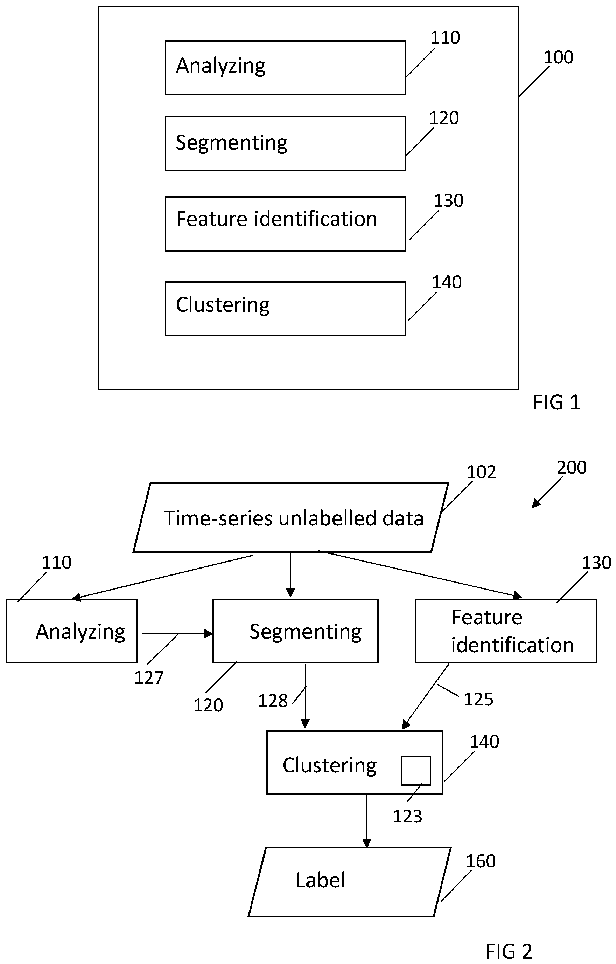

FIG 1 illustrates an example of an apparatus 100 for labelling of a time-series of un-labelled data 102 for supervised training of a machine learning model. The un-labelled data 102 does not have any labels (including ground truth labels or pseudo-labels) and labelling applies pseudo-labels.

FIG 2 illustrates an example of method 200 for labelling of a time-series of un-labelled data 102 for supervised training of a machine learning model. The method 200 can be performed by the apparatus 100. The un-labelled data 102 does not have any labels (including ground truth labels or pseudo-labels) and labelling applies pseudo-labels.

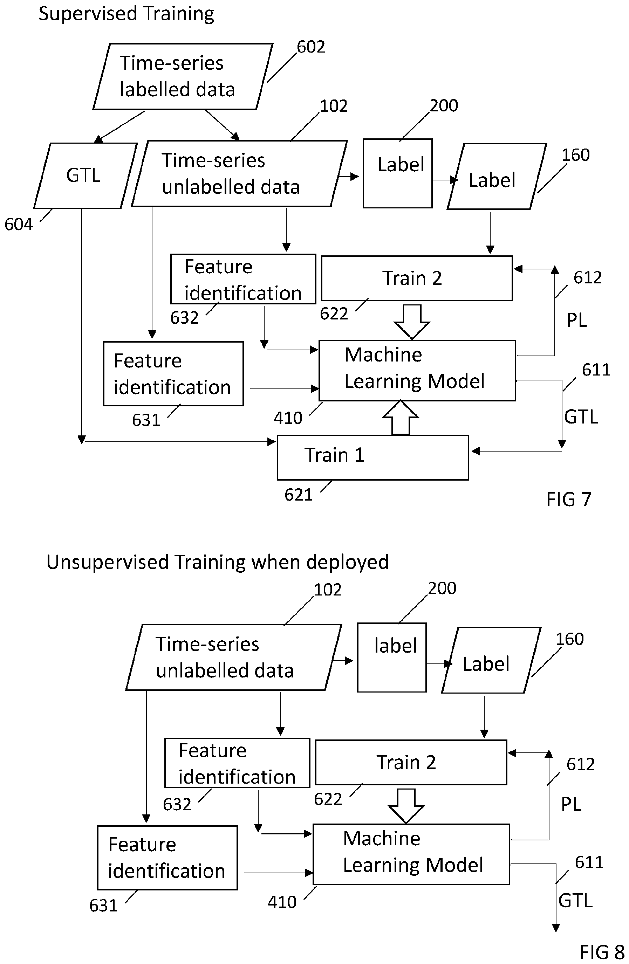

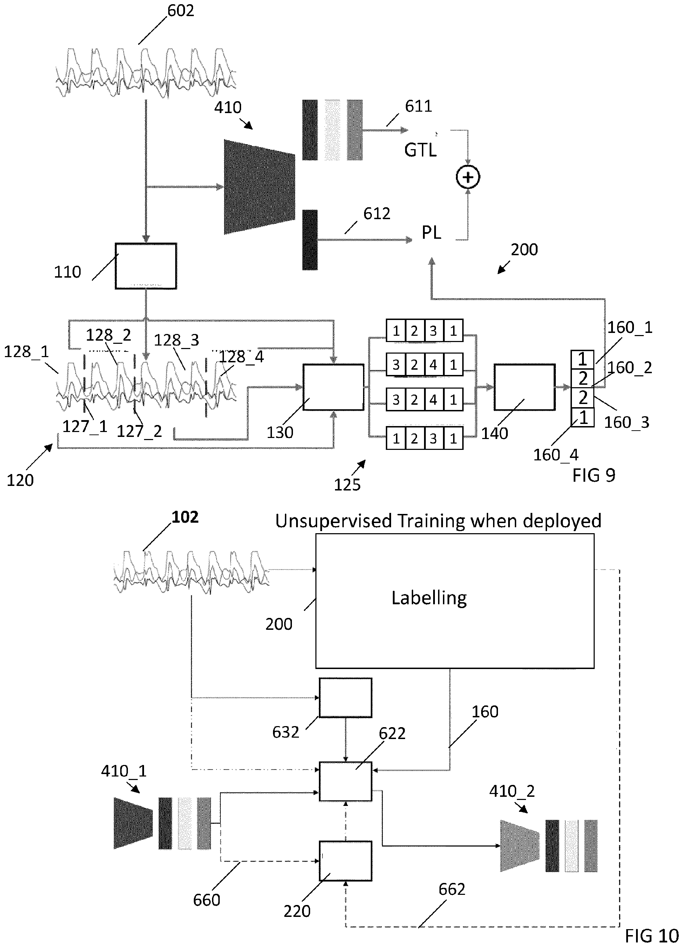

Examples of training the machine learning model are illustrated in FIGs 7 & 9 (original training) and FIGs 8 & 10-12 (in deployment training).

In at least some examples, the labelling of the time-series of un-labelled data 102 can be described as automated in the sense that it is performed or can be performed by the apparatus 100 without intervention or input from a user of the apparatus 100.

Supervised training of the machine learning model 410 requires labelled training data.

The time-series of un-labelled data 102 is the training data. The labelling 200 of the time-series of un-labelled data 102 provides labels 160 for the training data. The labels 160 are pseudo-labels. The labelling is pseudo-labelling.

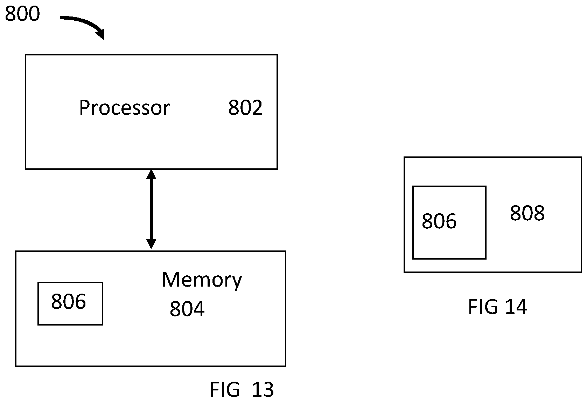

Referring to FIG 1, the apparatus 100 comprises various means for performing different functions. The term means indicates that function performed is of primary interest and the details of the platform that performs the function is of secondary interest. The functions can, for example, be performed using all any suitable circuitry, for example a controller 800 (FIG 14).

The apparatus 100 comprises analyzing means 110 for analyzing the time series of un-labelled data 102 to identify transition points 127 where there is a change, in the time series, of the un-labelled data 102 that exceeds a defined threshold value.

The apparatus 100 comprises segmenting means 120 for segmenting the time-series of un-labelled data 102 into segments 128 at the transition points 127.

The apparatus 100 comprises feature identification means 130 for identifying one or more features, for example multiple features, in the time-series of un-labelled data 102.

The apparatus comprises clustering means 140 for performing clustering of identified features, segment 128-by-segment 128, to provide a label 160 (a pseudo-label) for a segment 128, segment 128-by-segment 128.

FIG 2 illustrates an example of operation of the apparatus 100. The analyzing means 110 analyzes the time series of un-labelled data 102 to identify transition points 127 where there is a change, in the time series, of the un-labelled data 102 that exceeds a defined threshold value.

The segmenting means 120 segments the time-series of un-labelled data 102 into segments 128 at the transition points 127. The feature identification means 130 identifies one or more features 125 of the time-series of un-labelled data 102. The clustering means 140 performs clustering of identified features 125, segment-by-segment, to provide a label 160 (a pseudo-label) for a segment 128, segment-by-segment.

The label 160 (the pseudo-label) is dependent on the cluster or clusters determined for the segment 128.

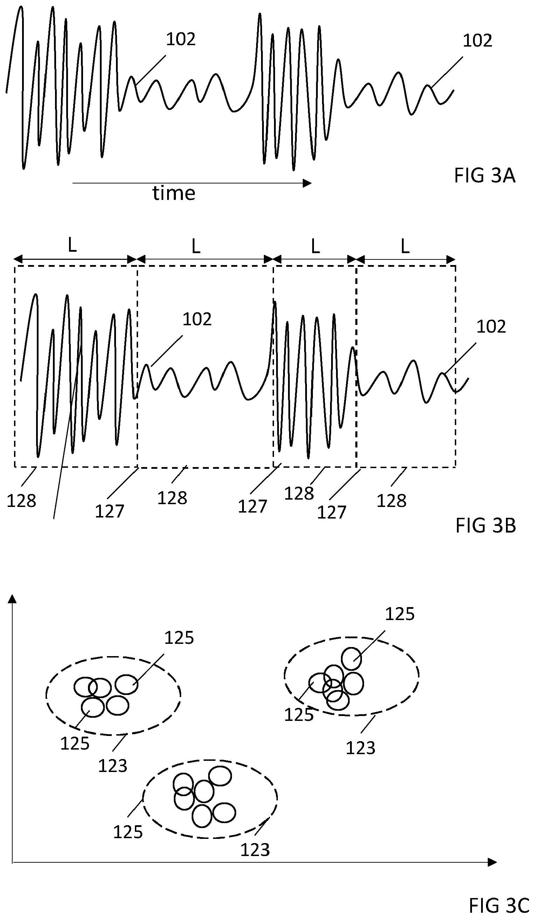

FIG 3A, illustrates an example of a time series of un-labelled data 102. As illustrated in FIG 2 and 3B , the apparatus 100 is configured to process the time series of un-labelled data 102 to produce a segmented time series of un-labelled data 102. The segmented time series of un-labelled data 102 comprises a series of contiguous, non-overlapping segments128. Each segment 128 comprises a portion of the time series of un-labelled data 102. Each portion of the time series of un-labelled data 102 is in only one segment. Each segment 128 has a length L. This length L is a time duration of the portion of the time series of un-labelled data 102 comprised in the segment 128. The lengths of the segments L can vary between segments 128.

The boundary between adjacent segments 128 represents a transition point 127 where there is a detected change, in the time series of the un-labelled data 102 that exceeds a defined threshold value. Where there is a change in the time series of the un-labelled data 102 that exceeds a defined threshold value there is a transition point 127 and a boundary between segments 128.

In at least some examples, a transition point 127 separates two segments 128 that have different entropy and the difference in entropy exceeds a threshold value. In at least some examples, a transition point 127 (segment boundary) separates different quantized entropy states of the time series of the un-labelled data 102.

As illustrated in FIG 2 and 3C, the apparatus 100 is configured to identify one or more features 125 in the time-series of un-labelled data 102. The apparatus 100 is configured to identify features 125 in each segment 128.

In at least some examples, the feature identification is performed for all the segments 128 and it is not performed selectively for only certain segments 128 and not performed for others. In some but not necessarily all examples, the processing for feature identification can be performed on a batch of sequences 128, where a batch comprises one or more sequences. In some but not necessarily all examples, the batches are processed in a time-sequence order.

In some examples, the apparatus 100 is configured to identifying one or more features 125, for example multiple features 125, in a segment 128, segment 128 by segment 128, in the time-series of un-labelled data 102.

The term 'segment-by-segment' means that feature identification is performed on the segments 128 separately. It does not necessarily imply time-ordered processing of the segments 128. In some but not necessarily all examples, the processing for feature identification can be performed in a time-sequence order.

In some but not necessarily all examples, the feature extraction is performed for all the segments 128 and it is not performed selectively for only certain segments 128 and not performed for others. In other examples, the feature extraction is performed selectively for only certain segments 128 and not performed for others.

The apparatus is configured to performing clustering of identified features, segment 128-by-segment 128, to provide a label 160 (a pseudo-label) for a segment 128, segment 128-by-segment 128.

The term 'segment-by-segment' means that the clustering is performed on the segments 128 separately. That is a segment 128 is processed to find one or more features 125 that are clustered in clusters 123 for that segment 128.

The term 'segment-by-segment' does not necessarily imply time-ordered processing of the segments 128. In some but not necessarily all examples, the separate processing of the segments 128 can be performed in a time-sequence order.

In some but not necessarily all examples, the clustering is performed for all the segments 128 and it is not performed selectively for only certain segments 128 and not performed for others. In other examples, the clustering is performed selectively for only certain segments 128 and not performed for others.

The clusters 123 produced provide a 'signature' for the segment 127 which is used as a label 160 (a pseudo-label).

The term 'segment-by-segment' means that each segment 128 is separately labelled, that is each segment 128 has it own label 160 (own pseudo-label). In some examples, all segments 128 are labelled, however, in other examples not every segment 128 has a label 160 (a pseudo-label).

In some but not necessarily all examples, the labelling is performed for all the segments 128 and it is not performed selectively for only certain segments and not performed for others. In other examples, the labelling is performed selectively for only certain segments 128 and not performed for others.

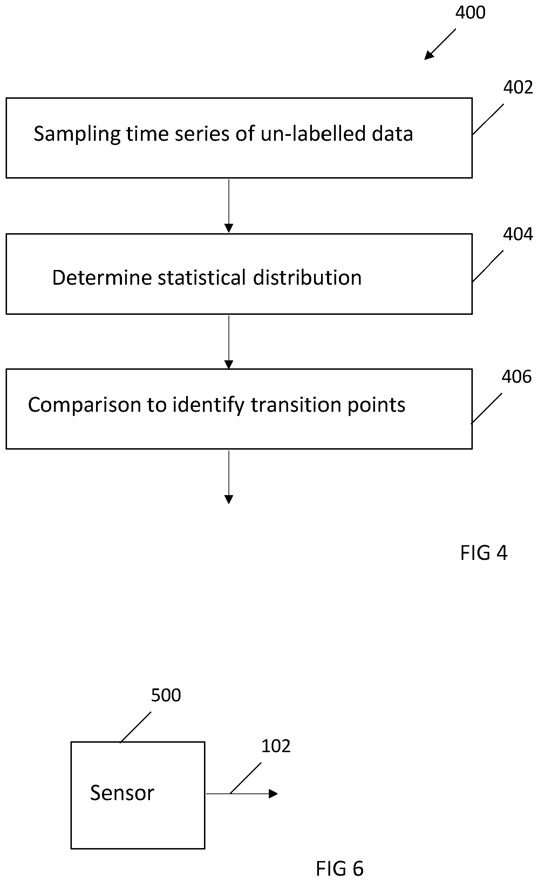

FIG 4 illustrates an example of a segmenting method for analyzing the time series of un-labelled data 102 to identify transition points 127 where there is a change, in the time series of the un-labelled data 102 that exceeds a defined threshold value. In at least some example, analyzing means 110 of the apparatus 100 is configured to perform the method 400.

The method 400, comprises at block 402, sampling the time-series of un-labelled data 102 to create a series of non-overlapping samples.

The method 400, comprises at block 404, determining a statistical distribution for each sample.

The method 400, comprises at block 406, comparing the statistical distribution of adjacent samples to identify as transition points 127 where there is a change in the statistical distribution of adjacent samples that exceeds a defined threshold value.

In at least some examples, the threshold value is a statistical measure of entropy for a multi-variable distribution.

In at least some examples the sample has a time period of tens of ms.

One way of performing this change-point detection can be to compare consecutive windows of the time-series data for distribution changes and assign a score based on known metrices like Kullback-Leibler Divergence or Pearson Divergence Estimation. Alternatively, one can also choose a different approach by first estimating many change-points and then slowly pruning them based on a penalty. In this approach the larger the penalty, the more sensitive the module would be while detecting any spurious changes.

In some but not necessarily all examples, the feature identification means 130 for identifying one or more features 125 of the time-series of un-labelled data 102 is configured to identify application-specific features of the time-series of un-labelled data 102.

In some but not necessarily all examples, the feature identification means 130 for identifying one or more features of the time-series of un-labelled data 102 is configured to perform feature identification in a parameter space. In this example, the time-series of un-labelled data 102 either comprises or is converted into parameters. A feature 125 is a discriminating characteristic of the data that is defined by a collection of parameters of the data. The feature 125 is represented by a discrete cluster in the vector space spanned by the parameters (a cluster in the parameter space).

The parameters can, for example, be principal components of the time-series of un-labelled data 102.

In at least some example, the features are raw statistics of the data for example a mean and/or a variance.

In some but not necessarily all examples, the clustering means 140 is configured to perform constrained clustering of identified features, segment 128-by-segment 128. In at least some examples, the clustering is constrained to produce a defined number N of clusters.

The clusters for a segment 128 are ordered based on cluster population. The ordered clusters 123 are identified using identifiers that identify a quantized position in the feature space. The ordered identifiers for the cluster provide the label 160 (the pseudo-label).

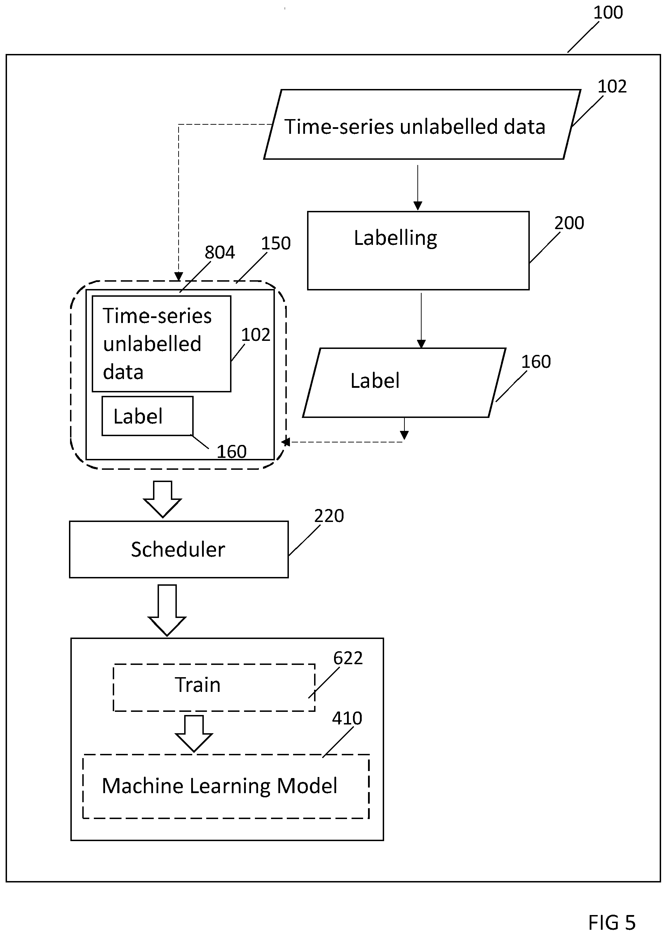

Referring to FIG 5, in some but not necessarily all examples, the technical purpose of the labelling is to train 622 the machine learning model 410, using supervised learning, to model or characterize the time-series of un-labelled data 102. The labelling applies pseudo-labels 160 and can be referred to as pseudo-labelling.

In some examples, the apparatus 100 additionally comprises training means for training 622 the machine learning model 410 and the apparatus 100 is configured to use the labels 160 (the pseudo-labels) from the labelling 200 of the time-series of un-labelled data 102 as labelled training data for training the machine learning model 410, using supervised learning.

In some but not necessarily all examples, the apparatus 100 is memory constrained and performs the labelling 200 (the pseudo-labelling), under memory constraints. The apparatus 100 is configured to store, in a memory 804, the time-series of un-labelled data 102 and the labels 160 (the pseudo-labels) labelling the segments 128 of the time-series of un-labelled data 102. In this example, the apparatus 100 additionally comprises storage means 150 for storing, in a memory 804, the time-series of un-labelled data 102 and the labels 160 (the pseudo-labels) labelling the segments 128.

The apparatus 100 comprises a scheduler 220 for dynamically scheduling the training-in-deployment 622 of the machine learning mode 410. The training-in-deployment 622 of the machine learning mode 410 is dependent upon a current workload of the apparatus 100. The scheduler can, for example, estimate a time it will take to adapt the machine learning model 410. The scheduler determines when the recalibration should be performed based on current load.

The time-series of un-labelled data 102 can come from any suitable source.

In at least some examples, the analyzing means 110 for analyzing the time series of un-labelled data 102 to identify transition points 127 where there is a change, in the time series, of the un-labelled data 102 that exceeds a defined threshold value is configured in dependence upon the source of the time-series of un-labelled data 102.

In at least some examples, the feature identification means 130 for identifying one or more features the time-series of un-labelled data 102 is configured in dependence upon the source of the time-series of un-labelled data 102.

In at least some examples, for example as illustrated in Fig 6, the source of the time-series of un-labelled data 102 is one or more sensors 500. The time-series of un-labelled data 102 is then a time-series of un-labelled sensor data.

In some examples, the one or more sensors 500 are separate to the apparatus 100. In other examples, some or all of the one or more sensors 500 are comprised in the apparatus 100.

The time-series of un-labelled data 102 is data produced by one or more sensors 500. The features 125 identified are features configured, for the sensor 500, to discriminate the sensor data 102.

One example of a sensor 500 is an accelerometer, for example, a tri-axes accelerometer for measuring acceleration in three orthogonal directions. In this example, a transition point 127 can be determined using metrics like Pearson Divergence Estimate or Kullback-Leibler Divergence of the data from the tri-axial accelerometer data and the features 125 can be identified using the per-axes mean for an accelerometer data.

One example of a sensor 500 is a microphone. In this example, a transition point 127 can be determined using the change in distribution of acoustic data collected from the microphone and the features 125 can be identified using a principled signal processing transformation like Fast Fourier Transform or Mel-Frequency Cepstral coefficients (MFCC) for audio data.

Other sensors 500 may be used. For example, any sensor that produces time-series data. Some examples are inertial sensors, heart-rate sensors, photoplethysmography ( PPG) sensors, electrocardiogram ECG), electroencephalogram (EEG), microphone, position sensor, speed sensor, acceleration sensor, force sensor etc.

In at least some examples, the technical purpose of the labelling 200 (the pseudo-labelling) is to train the machine learning model 410, using supervised learning, to de-noise the time-series of un-labelled sensor data 102. That is remove a source of error. In some example, the machine learning model 410 is trained, using supervised learning, to compensate for sensor domain shift during deployment. This de-noises the sensor output by compensating for a shift in distribution of the sensor output. The noise/error is the shift in distribution of the sensor output.

The one or more sensors 500 can, for example, be environmental sensors. The de-noising is advantageous when the one or more sensors 500 is in an environment that dynamically changes with time, affecting domain shift of the sensor 500 during use. FIG 7 illustrates an example of supervised training of the machine learning model 410. This illustrates the original training of the machine learning model 410.

The machine learning model 410 is initially trained using the time-series of data 102, the labels 160 (the pseudo-labels) labelling segments 128 of the time-series of data 102 and supervision labels (the ground truth labels) 602 (source data).

A time series of labelled data 602 comprises the supervision labels 604 (the ground truth labels GTL) and the time series of data used as the time series of un-labelled data 102 by the labelling 200 to produce the labels 160 (the pseudo-labels).

In the example illustrated, the machine learning model 410 is a multi-task machine learning model 410 trained to produce, from an input comprising the time-series of un-labelled data 102, two task outputs 611, 612 including a ground truth inference output 611 and a re-training (re-tuning) output 612 that provides labels (the inference pseudo-labels) that label segments 128 of input time-series of un-labelled data 102.

The time series of data 602 and the supervision labels 604 (the ground truth labels GTL) are used to train 621 the ground truth inference output 611. The time series of data 602 and the generated labels 160 (the pseudo-labels) are used as inputs to train 622 the re-training (re-tuning) output 612.

The time series of data 602 can optionally be pre-processed 631 to identify features optimized to train the ground truth inference output 611. The time series of data 602 can optionally be pre-processed 632 to identify features optimized to train the re-training (re-tuning) output 612. This preprocessing can, for example, be the same feature identification used in the labelling process 200.

FIG 8 illustrates an example of unsupervised (re) training of the machine learning model 410. This illustrates in deployment (re) training of the machine learning model 410.

The un-labelled time series of data 102 is provided to the trained machine learning model 410 to produce as an output the ground truth inference output 611. The time series of data 102 can optionally be pre-processed 631 to identify features, if this was used during training.

The time series of un-labelled data 102 is used for the labelling 200 to produce the labels 160 (the pseudo-labels).

The time series of un-labelled data 102 and the generated labels 160 (the pseudo-labels) are used to partially (re) train the machine learning model 410 based on the re-training (re-tuning) output 612.

The time series of un-labelled data 602 can optionally be pre-processed 632 to identify features optimized to train the re-training (re-tuning) output 612. This preprocessing can, for example, be the same feature identification used in the labelling process 200.

The machine learning model 410 is partially re-trained (re-tuned), while deployed, using the segmented time-series of un-labelled data 102 and the labels 160 (the pseudo-labels) labelling the segments 128. This provides run-time re-tuning of machine learning model 410 without using any of the source data used to originally train the machine learning model 410.

In deployment re-training of the machine learning model 410 uses a loss calculated using the generated labels 160 (the pseudo-labels) labelling the segments 128 of the time-series of un-labelled data 102 and the re-training (re-tuning) labels 612 labelling the time-series of un-labelled data 102.

In some example, the machine learning model 410 is an artificial neural network.

An artificial neural network (ANN) comprises a plurality of nodes arranged in layers. The layers include an input layer, an output layer and one or more intermediate or hidden layers between the input layer and the output layer. The network has a forward direction from input to output and a backwards direction from output to input.

The node in one layer is interconnected, separately, to one or more or each of the nodes in the preceding layer (if any) and is interconnected, separately, to one or more or each of the nodes in the following layer (if any). The neural network forms a directed, weighted graph. Each node has a weight that determines the strength of a nodes influence on a connected node in the forward direction.

In at least some examples, the machine learning model 410 is an artificial neural network (ANN) comprising one or more batch normalization layers.

A batch normalization layer is a layer used to normalize a hidden node's activation values so that the distribution of these activations remains the same during training. A batch normalization layer is fed from a hidden layer of nodes. Affine parameters of the batch normalization layer are beta ($\beta$) and gamma ($\gamma$). These are learnable parameters. A mean moving average, and variance moving average are updated parameters used during inference.

Batch normalization comprises, for a batch, calculate a mean and variance for a node, normalizing the node output A (subtract mean and divide by standard (the square root of the variance), then scale and shift to obtain a normalized output: $\gamma$ A + $\beta$. Then update the moving averages.

The affine parameters ($\gamma$, $\beta$) are not hyperparameters (i.e. constants provided by the model designer) but are trainable parameters that are learned by the ANN. The batch normalization layer can optimally find the best affine parameters, and can thus shift and scale the normalized values to get the best predictions.

In deployment re-training (re-tuning) of the machine learning model 410 comprises fixing parameters for at least one or more hidden layers of the ANN 410 other than one or more batch normalization layers of the ANN 410 and training the one or more batch normalization layers using the segmented time-series of un-labelled data 102 and the labels labelling the segments 128.

In at least some examples, for example, as illustrated in FIG 7, the ANN 410 is a multi-task machine learning model trained to produce, from an input comprising the time-series of un-labelled data 102, two task outputs including a ground truth inference output 611 and a re-training (re-tuning) output 612 that provides inference labels that label the input time-series of un-labelled data 102. All layers of ANN are fixed except one or more batch normalization layers and the layer at the re-training (re-tuning) output 612 that provides inference labels that label the input time-series of un-labelled data 102.

A loss is calculated using the generated labels labelling the segments 128 of the time-series of un-labelled data 102 and the re-training (re-tuning) inference labels 612 labelling segments of the time-series of un-labelled data 102. The loss is backpropagated to train the one or more batch normalization layers and the layer at the re-training (re-tuning) output 612 that provides inference labels that label the input time-series of un-labelled data 102.

In at least some examples, the apparatus 100 is configured to train affine parameters of the batch normalization layer using gradient descent.

In the examples previously described, the re-training, for example re-tuning 622 (FIG 7), is based on labels 160 (pseudo-labels) that are generated from only the time-series of un-labelled data 102. The machine learning model 410 is not used at all for the generation of the labels 160 (the pseudo-labels). As the original model is not used for generating labels 160 (the pseudo-labels), there is no need to keep copies of the original model nor any need for an extensive memory allocation to manage segregated model updates. This improves deployment over resource-constrained devices, for example edge devices, such as mobile telephones or other hand portable apparatus. There is no need to use the original source data used for the original training of the machine learning model nor is there a need to have labelled deployment (test time) data.

The machine learning model 410 is only fine-tuned based on the changes in the target domain and gets tuned to the domain shift of the training time-series of un-labelled data 102 accordingly. In some examples, the fine-tuning is performed only on the Batch Normalization layers and a small task head 612 of the machine leaning model 410 which is both computation and resource efficient.

The described approach is optimized for time-series data. The approach does not use the un-adapted (or adapted) model 410 for generating the labels 160 (the pseudo-labels)=, making it more robust to drastic domain shifts. The approach does not use original source training data. The approach captures a shift in unsupervised changes within sensor signals to indicate and capture the domain shift. The approach uses dynamic segmentation based on change detection and feature clustering within the segments to capture and correct for the domain shift. The approach uses a constrained update to the machine learning model 410. This approach maintains calibration for the ground truth inference output 611 while being adaptable such that even after adaptation the model performs well for the ground truth inference output 611 after adaptation.

The approach can be used with any practical application which takes a time-series data as input.

For example, an interesting application can be to perform test-time adaptation on ECG data for a new individual (adapting to cross-user heterogeneity). Another example can be to perform deployment adaptation on audio.

FIG 9 illustrates an example of supervised training of the machine learning model 410, where the machine learning model 410 is an artificial neural network (ANN). This illustrates the original training of the ANN 410.

The process is as previously described with reference to FIG 7 and similar reference numerals are used.

As the model 410 cannot be trained on a dataset that fully represent all the conditions at test time (deployment), any restrictions on how the data is collected in the source can be unrealistic. Understanding this, a principled training regime is presented which does not need any restrictions on its data sources. While training of the model 410 in the source domain there is access to the original ground-truth labelled time-series data 602 and therefore, the training data can be represented as $T_{train} = < x^{train}, y^{train} >$. Where $x^{train}$ is the data 102 and $y^{train}$ are the ground truth labels (GTL) 604.

Change points 127 are identified by determining and classifying changes across the time-series data 102. The first step is to perform an unsupervised change-point detection on the sensor signals 102 obtained from the data source (say a microphone). Mathematically, the change-point detection algorithm will detect the changes in distribution across the signal 102 and mark the instances in time where the distribution has changed._The change-points define dynamic windows (segments 128) across the data 102.

The change-point detection module 120 performs the task of segmenting the time-series data into segments 128 (not necessarily of equal dimensions) depending on how the signal changed across time. Notably, as this module 120 would still be in use during the test-time where the ground-truth labels may not be available, we need to use an unsupervised approach for achieving this. One way of performing this change-point detection can be to compare consecutive windows of the time-series data for distribution changes and assign a score based on known metrices like Kullback-Leibler Divergence or Pearson Divergence Estimation. Alternatively, one can also choose a different approach by first estimating many change-points and then slowly pruning them based on a penalty. In this approach the larger the penalty, the more sensitive the module would be while detecting any spurious changes.

Now, once these change-points 127 are computed or in other words the time-series data is segmented the next step is to understand the signal characteristics across these segments 128.

The apparatus 100 obtains the signal-based features 125 from the segments 128 after the change-point detection. The signal-based features 125 can be principled features like spectrograms, for example acoustic data or radio signal, or any other proprietary features for a given data modality.

A signal processing module 130 can be used to extract one or more features 125. The features extracted in this module will be dependent on the type of signal processed. For example, if the input signal is audio, the extracted features can be the MFCC coefficients, whereas, if the input data is from a triaxial accelerometer, the features can be simple mean of all the individual axes across the individual segments.

As this approach of detecting changes is unsupervised, it is also important to understand that there can be any *M* number of changes observed in the signal 102 and this *M may or may not be equal to N,* where N is the number of classes that the model 410 classifies. Therefore, to clearly observe how the changes spread the data 102 into the feature space, we rely on an unsupervised clustering approach to cluster the data across changes into N clusters 125 only and use this cluster index as the pseudo-labels 160.

Once these clusters are done, then the pseudo-labels 160 are stored. This transforms the training data from *T'train* = < $x^{train}$, $y^{train}$ > to *T'train* = < $x^{train}$, $y^{train}$,

$y_{pseudo}^{train} >$ , where $y_{pseudo}^{train}$ are the pseudo-labels 160.

In the example illustrated, the pseudo-labels 160 are the cluster indices from the cluster 125 the samples belonged to. In principle, the pseudo-labels $y_{pseudo}^{train}$ give an idea of how the true distribution of the signal changes over time in comparison to the true labels $y_{\square}^{train}$ which simply represent the main task happening at that instance of time.

Finally, once this transformed training data is obtained the final step is to train the model 410 in a multitask fashion with two task heads - one to predict the true training label $y_{train}$ 611 and the other to predict the pseudo-label $y_{pseudo}^{train}$ 612 with a joint cross-entropy loss from both the tasks. This teaches the trained model 410 to understand both the task specific information as well as the actual changes in distribution of the signal across time.

FIG 10, 11 and 12 illustrate an example of unsupervised (re) training of the machine learning model 410, where the machine learning model 410 is an artificial neural network (ANN). This illustrates in-deployment (re) training of the ANN 410.

The process receives un-labelled test-time data 102 and a pre-trained model 410_1 as input and gives an adapted model 410_2 as the output. This adapted model 140_2 is adapted to provide accurate predictions on the unknown and unlabeled test data 192.

Self-supervised training 622 is performed using the pseudo-labels 160 from the labelling process 200 and using the time series of un-labelled data 102 which, optionally may have been processed 632 to extract features.

The scheduler 220 can schedule the self-supervised training 622. The scheduling can for example be based on model architecture information 660 and/or memory requirements 662.

The task scheduler 220 can schedule this task of adaptation based on the current workload of the edge-device. It includes a scheduler which computes the time taken to recalibrate the model by computing the number of multiply-and-accumulate (MAC) operations combined with empirical observations for time consumed in updating the parameters for batch normalization layers (as they do not need MAC) and finally the current tasks running on the device to come up with a schedule for recalibrating the model at test-time.

During deployment, only the pre-trained model and nothing else is required from the source (source illustrated in FIG 9). No labelled test-time data is required during the deployment. The model adaptation 622 is thus completely unsupervised.

The apparatus 100 has access to un-labeled time-series data 102 and, the data 102 during deployment can be represented as $T_{test} =< x^{test} >$.

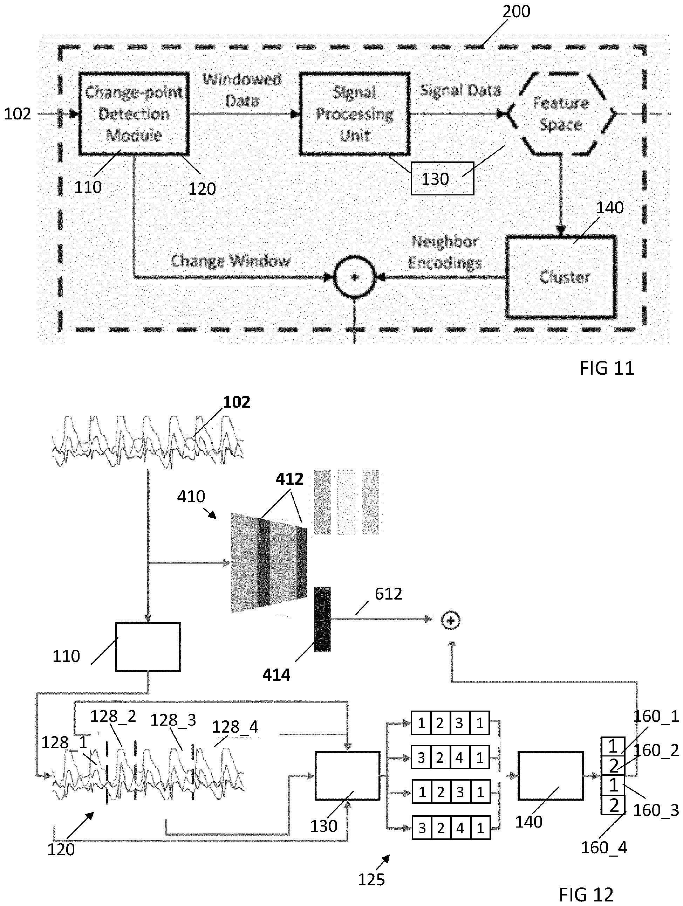

A pseudo-labelling process 200 is illustrated in more detail in FIG 11.

Analyzing means 110 analyzes the time series of un-labelled data 102 to identify transition points 127 where there is a change, in the time series, of the un-labelled data 102 that exceeds a defined threshold value. Analyzing means 110 performs unsupervised change-point detection. This creates segments in the signal 102 having intra-segment semantic similarity across the time and inter-segment semantic differences across the time.

Segmenting means 120 segments the time-series of un-labelled data 102 into segments 128 at the transition points 127.

Signal processing means and feature identification means 130 identifies one or more features in the time-series of un-labelled data 102. The signal-based features 125 can be principled features like spectrograms for acoustic data or any other proprietary features for a given data modality.

Clustering means 140 performs clustering of identified features 125, segment-by-segment, to provide a pseudo-label 160 for a segment 128, segment-by-segment. The clustering identifies other similar activities across the data 102 in an unsupervised manner. The clustering means 140 clusters the features 125 in an unsupervised manner and stores the cluster indices as the pseudo-labels 160. This step transforms the unlabeled test-time data 102 with the pseudo-labels 160 and can be represented as

$$T_{test} =< x^{test}, y_{pseudo}^{test} >.=$$ , where $y_{pseudo}^{test}$ is the pseudo-labels 160.

This is used to adapt the pre-trained model 410_1 using self-supervised training 622.

In the example illustrated in FIG 12, the trained model 410 does not completely depend on the self-supervised task only to adapt itself, but it also constrained to ensure that it performs accurately on the intended end task.

Considering the sensors to be extremely resource constrained devices like smartphones with limited CPU, memory and other tasks running in parallel, this recalibration can be an extremely costly. To mitigate this challenge, this invention proposes a two-step solution: First, the proposed re-calibration only needs to update the batch normalization layers 412 of the ANN 410 and the task head 414 for predicting the pseudo-labels 612 with $y_{pseudo}^{test}$ using cross-entropy loss. Other than these two partitions of the ANN 410 it freezes all the other weights for all other layers of the ANN 410 and for task-head dedicated for predicting the true-labels.

Consider an industrial warehouse where the delivery of the goods is done using a drone-based delivery system where the drones are voice controlled captured using the smartphone as the controlling device.

Consider the infrastructure providers of the drone train a model 410 using data collected over some smartphone X. A typical acoustic data in that case can be captured at a sampling rate of 16-44 kHz with 16-bit encoding and mono-channel audio. The captured data in this case will contain the different keywords like Up, Left, Right, Down, Stop, and Go (N=6), that will be used to control the movement of the drone. The infrastructure providers collect this audio data in a continuous form from multiple participants using the same device X in a controlled manner. However, the infrastructure providers understand that during test-time (use) the staff of the warehouse may use any smartphone which may introduce hardware heterogeneity. This hardware heterogeneity will be caused, for example, due to the hardware components like analog-to-digital converter (ADC) which may be different for different manufacturers. In this scenario the current approach allows the infrastructure providers to manage the hardware heterogeneity. As described above the machine learning model is fine-tuned at test-time (deployment) without the access to this training data.

The details are as follows:
The steps followed by the infrastructure provider for the model development are described below with reference to FIG 7 and 9.

First the audio data 102 is segmented into windows of fixed duration (like 2 seconds) and used to obtain the spectrogram using Short-term Fourier Transform (STFT). The spectrogram images are then used 621 as the training data 102 along with the true ground-truth labels 604. The true ground-truth labels 604 here will be the keywords mentioned above (e.g. Up, Left, Right, Down, Stop, and Go).

In addition to this, the audio data 102 is also passed through an unsupervised change-point detection algorithm 110 to segment 120 the audio data 102 into segments 128 based on the changes present in the audio data 102. Notably, these segments 128 may or may not be of equal length L.

One option is to perform this change detection by first segmenting the audio into small windows of duration t (like 50ms) and then measure the distribution change across the windows. If this distribution change is higher than some predefined threshold, then a segment 128 will be made in the audio stream 102. If not, it will be considered a part of the same distribution and no segments 128 will be created. Therefore, the smallest window after this process will have the duration equal to t.

Once these change points 127 are detected and the audio data 102 is segmented 120 based on the changes, each segment 128 is then passed through the signal processing unit 130 to compute, for example, the Mel-frequency Cepstral Coefficients (MFCC). Say, for example, the audio is segmented into n segments. Then we will have MFCC computed for each of these n segments. However, as this *n* may or may not be equal to N. The next process is to perform k-means clustering 140 over the MFCC data obtained from the segments 128, where k=n.

After this step, each of the segments 128 will now have a cluster index (also called the pseudo-label 160). For example, the first segment 128_1 may be clustered into cluster 1 based on its MFC coefficients.

Based on this, cluster index for a second training dataset is also created 632 where the data is Short-time Fourier transform (STFT) images of the audio data 102, however, the ground-truth labels are the pseudo-labels 160 (the indices will be integer ids like 0 to 5).

With this two-training data, the infrastructure provider trains a Visual Geometry Group 16-layer mode (VGG-16) as the encoder (or feature extractor) with two output heads.

The purpose of one of the first output head will be to predict the true ground-truth inference label 611 (a keyword). On the other hand, the second output head will be used to predict the pseudo-label 612. Both these output heads will be sharing the entire VGG-16 network 410 as their feature extractor and the model will be trained 621, 622 using a cross-entropy loss backpropagated from both heads optimized through an Adaptive Moment Estimation (Adam) optimizer which adapts the learning rate of each parameter based in its historical gradients and momentum.

Once this model 410 is trained, the model with both its heads will be installed as a part of the keyword spotting application over the smartphones of different workers in the warehouse.

The steps followed at the edge device (the workers smartphone) are described below with reference to FIG 12.

While installing the application, the backpropagation layers of the VGG-16 encoder 410 along with the second output head for pseudo-label 612 will be unfrozen, i.e., these layers can still be retrained in the deployment phase as well. Other than these, the remaining layers of the VGG-16 encoder 410 along with the first output head for the ground truth inference label 611 will be fixed and cannot be retrained on the device during deployment.

Source-free Adaptation now occurs during deployment. The adaptation happens on-device without any manual intervention. Also, it neither requires true ground-truth labelled test-time data nor any access to the training data earlier collected by the infrastructure providers. The adaptation process occurs as follows.

The continuous unlabeled audio data 102 is captured on-device at test-time at the same prefixed sampling rate, encoding and channel settings. A scheduler 220 depending on the current load of the device 100 and the resources available on the device 100 proposes a schedule to perform the adaptation. For example, the scheduler 220 may investigate the number of MAC operations required for the adaptation of the unfrozen layers of the deployed model and the current workload on the smartphone and suggest that the best time to perform the adaptation during midnight when the phone 110 is charging.

During the adaptation phase, the raw unlabeled audio data 102 is first passed through the unsupervised change-point detection algorithm 110. The audio data 102 is segmented 120 into p segments 128 based on the changes observed in the signal 102. The algorithms work the same way as it does during the training phase as it neither requires any human intervention nor requires any true ground-truth labelled data.

Next, for each of these p segments 128, the MFCC features are computed 130. These MFCC vectors are used to cluster 140 these p segments into N clusters, where N=6 is number of keywords detected by the application.

For example, if there are 6 keywords to be detected, then each segment is clustered into one of these 6 classes using the MFCC features computed from the segment.

Once this clustering process 130 is completed, each segment 128 is assigned a cluster index, depending on which cluster 123 it belongs to, which serves as the pseudo-label 160 for that segment 128. Say, for example, the 4th segment 128_4 is assigned a cluster index of 0, then the pseudo-label 160_4 for the corresponding data of the 4th segment is assigned as 0.

In parallel, the raw-audio 102 is also windowed into same window-length used during the training phase (say, 2 secs here as well) and the spectrogram images are obtained 632 using the STFT.

The spectrogram images 102 along with the pseudo-label 160 obtained after the change detection followed by clustering step is used to create a pseudo dataset which is used to fine-tune 622 the unfrozen layers of the overall model 410.

For example, in this application, this dataset will be used to update the affine parameters of the batch normalization layers of the VGG-16 encoder 410 along with the weights of the one fully connected layer which serves as the second output head for the pseudo-labels 612 of the entire model 410. To achieve this, the second output head for the pseudo-labels 612 will backpropagate the gradients it observes after predicting a pseudo-label 612 and estimating the error using the cross-entropy loss optimized using the Adam optimizer.

Once the adaptation 622 is done, the application will use the keyword predictions 611 made by the first output head of the model 410 to control the drones in the warehouse.

Training the model 410 with the first head ground truth (pseudo-label 612) does not significantly compromise operation of first head ground truth inference output 611.

The described approach achieves an improvement of 30% achieved with low processing over head.

In another example, a the machine learning model 410 is a Human Activity Recognition (HAR) model. The model architecture can be as described in "A Systematic Study of Unsupervised Domain Adaptation for Robust Human-Activity Recognition" by Chang et al (Technologies Volume Issue Article No.: 39pp 1-30https://doi.org/10.1145/3380985), The ML model 410 is a convolutional neural network (CNN) with a shared encoder.

The first head for task 1 (inference) is a True Label Classifier and comprises two dense Layers followed by a SoftMax layer. The second head for task 2 (domain shift adaptation) is a Pseudo-Label Classifier and comprises one SoftMax layer. The true labels are 7 physical activity classes -- climbing stairs down and up, jumping, lying, standing, sitting, running/jogging, and walking.

Fig 13 illustrates an example of a controller 800 suitable for use in an apparatus 100. Implementation of a controller 800 may be as controller circuitry. The controller 800 may be implemented in hardware alone, have certain aspects in software including firmware alone or can be a combination of hardware and software (including firmware).

As illustrated in Fig 13 the controller 800 may be implemented using instructions that enable hardware functionality, for example, by using executable instructions of a computer program 806 in a general-purpose or special-purpose processor 802 that may be stored on a computer readable storage medium 804 (disk, memory etc), that is connected to the processor 802, to be executed by such a processor 802.

The processor 802 is configured to read from and write to the memory 804. The processor 802 may also comprise an output interface via which data and/or commands are output by the processor 802 and an input interface via which data and/or commands are input to the processor 802.

The memory 804 stores a computer program 806 comprising computer program instructions (computer program code) that controls the operation of the apparatus 100 when loaded into the processor 802. The computer program instructions, of the computer program 806, provide the logic and routines that enables the apparatus to perform the methods illustrated in the accompanying Figs. The processor 802 by reading the memory 804 is able to load and execute the computer program 806.

The apparatus 100 comprises:

at least one processor 802; and
at least one memory 804 including computer program code;
the at least one memory 804 and the computer program code configured to, with the at least one processor 802, cause the apparatus 100 at least to perform:

(i) analyzing the time series of un-labelled data to identify transition points where there is a change, in the time series, of the un-labelled data that exceeds a defined threshold value;

(ii) segmenting the time-series of un-labelled data into segments at the transition points;
(iii) identifying one or more features, for example multiple features, in the time-series of un-labelled data;
(iv) performing clustering of identified features, segment-by-segment, to provide a label for a segment, segment-by-segment.

The apparatus 100 comprises:
at least one processor 802; and

at least one memory 804 including computer program code,
the at least one memory storing instructions that, when executed by the at least one processor 802, cause the apparatus at least to:

(i) analyze the time series of un-labelled data to identify transition points where there is a change, in the time series, of the un-labelled data that exceeds a defined threshold value;
(ii) segment the time-series of un-labelled data into segments at the transition points;
(iii) identify one or more features, for example multiple features, in the time-series of un-labelled data;
(iv) perform clustering of identified features, segment-by-segment, to provide a label for a segment, segment-by-segment.

As illustrated in Fig 14, the computer program 806 may arrive at the apparatus 100 via any suitable delivery mechanism 808. The delivery mechanism 808 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 806. The delivery mechanism may be a signal configured to reliably transfer the computer program 806. The apparatus 100 may propagate or transmit the computer program 806 as a computer data signal.

Computer program instructions for causing an apparatus to perform at least the following or for performing at least the following:

(i) analyzing the time series of un-labelled data to identify transition points where there is a change, in the time series, of the un-labelled data that exceeds a defined threshold value;
(ii) segmenting the time-series of un-labelled data into segments at the transition points;
(iii) identifying one or more features, for example multiple features, in the time-series of un-labelled data;

(iv) performing clustering of identified features, segment-by-segment, to provide a label for a segment, segment-by-segment.

The computer program instructions may be comprised in a computer program, a non-transitory computer readable medium, a computer program product, a machine readable medium. In some but not necessarily all examples, the computer program instructions may be distributed over more than one computer program.

Although the memory 804 is illustrated as a single component/circuitry it may be implemented as one or more separate components/circuitry some or all of which may be integrated/removable and/or may provide permanent/semi-permanent/ dynamic/cached storage.

Although the processor 802 is illustrated as a single component/circuitry it may be implemented as one or more separate components/circuitry some or all of which may be integrated/removable. The processor 802 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 806. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 100 is configured to communicate data from the apparatus 100 with or without local storage of the data in a memory 804 at the apparatus 100 and with or without local processing of the data by circuitry or processors at the apparatus 100.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio communication such as 5G (5th generation of 3rd Generation Partnership Project (3GPP)), 6G or any further generation. The apparatus may comprise a communications interface such as, for example, a radio transceiver for communication of data.

The apparatus 100 may be part of the Internet of Things (IoT) forming part of a larger, distributed network.

The processing of the data, whether local or remote, may be for the purpose of health monitoring, data aggregation, patient monitoring, vital signs monitoring or other purposes. The data is received from one or more related sensor, which may reside in the apparatus 100 or may be external sensors.

The processing of the data, whether local or remote, may produce an output. The output may be communicated to/in the apparatus 100 where it may produce an output sensible to the subject such as an audio output, visual output or haptic output.

The systems, apparatus, methods, and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

As used here 'module' refers to a unit or apparatus that excludes certain parts/components that would be added by an end manufacturer or a user. The apparatus 100 can be a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, such as a mobile communication device, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to:

mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:

   analyzing the time series of un-labelled sensor data to identify transition points where there is a change, in the time series, of the un-labelled sensor data that exceeds a defined threshold value;
   segmenting the time-series of un-labelled sensor data into segments at the transition points;
   identifying multiple features in the time-series of un-labelled sensor data; and
   performing clustering of the identified features, segment-by-segment, to provide a label for a segment, segment-by-segment.

2. An apparatus as claimed in claim 1, further comprising means for training a machine learning model using the segmented time-series of un-labelled sensor data and the labels labelling the segments for compensating for sensor domain shift during deployment.

3. An apparatus as claimed in any preceding claim, wherein the means for analyzing the time series of un-labelled sensor data to identify transition points where there is a change, in the time series, of the un-labelled sensor data that exceeds a defined threshold value further comprises means for:

   sampling the time-series of un-labelled sensor data to create a series of non-overlapping samples;
   determining a statistical distribution for each sample; and
   comparing the statistical distribution of adjacent samples to identify as transition points where there is a change in the statistical distribution of adjacent samples that exceeds a defined threshold value.

4. An apparatus as claimed in claim 3, wherein the threshold value is a statistical measure of entropy for a multi-variable distribution.

5. An apparatus as claimed in any preceding claim, wherein the means for identifying multiple features in the time-series of un-labelled sensor data further comprises means for converting the time series of un-labelled sensor data to parameters and identifying the features using the parameters, wherein a feature is a discriminating collection of parameters.

**6.** An apparatus as claimed in claim 5, wherein the means for identifying the features using the parameters a feature further comprises means for identifying discrete clusters in a vector space spanned by the parameters as features.

**7.** An apparatus as claimed in any preceding claim, wherein the time-series of un-labelled sensor data is data produced by one or more sensors and wherein the features are configured, for the one or more sensors, to discriminate sensor data.

**8.** An apparatus as claimed in any preceding claim further comprising means for training a machine learning model using the segmented time-series of un-labelled sensor data and the labels labelling the segments.

**9.** An apparatus as claimed in any preceding claim further comprising means for run-time re-tuning of the machine learning model without using source data used to originally train the machine learning model.

**10.** An apparatus as claimed in any preceding claim, wherein the machine learning model is a multi-task machine learning model trained to produce, from an input comprising the time-series of un-labelled sensor data, two task outputs including an inference output and a re-training output that provides inference labels that label the input time-series of un-labelled sensor data.

**11.** An apparatus as claimed in claim 10, further comprising means for in deployment re-training of the machine learning model using a loss calculated using the generated labels labelling the segments of the time-series of un-labelled sensor data and the inference labels labelling the time-series of un-labelled sensor data.

**12.** An apparatus as claimed in any preceding claim, wherein the machine learning model is an artificial neural network (ANN) comprising one or more batch normalization layers, and wherein training the machine learning model comprises fixing parameters for at least one or more hidden layers of the ANN other than one or more first batch normalization layers of the machine learning model and training the one or more first batch normalization layers using the segmented time-series of un-labelled sensor data and the labels labelling the segments.

**13.** An apparatus as claimed in claim 10, further comprising means for training affine parameters of the batch normalization layer using gradient descent.

**14.** An apparatus as claimed in any preceding claim, further comprising means for scheduling a training a machine learning model using the labels.

**15.** A method comprising:

analyzing the time series of un-labelled sensor data to identify transition points where there is a change, in the time series, of the un-labelled sensor data that exceeds a defined threshold value;
segmenting the time-series of un-labelled sensor data into segments at the transition points;
identify multiple features in the time-series of un-labelled sensor data; and
performing clustering of the identified features, segment-by-segment, to provide a label for a segment, segment-by-segment.

Analyzing — 110

Segmenting — 120

Feature identification — 130

Clustering — 140

100

FIG 1

102

200

Time-series unlabelled data

110 Analyzing

127

Segmenting — 120

128

130 Feature identification

125

Clustering — 140

123

160 Label

FIG 2

FIG 3A

FIG 3B

FIG 3C

400

402

Sampling time series of un-labelled data

404

Determine statistical distribution

406

Comparison to identify transition points

FIG 4

500

Sensor

102

FIG 6

100

Time-series unlabelled data    102

Labelling    200

Label    160

804    150

Time-series unlabelled data    102

Label    160

Scheduler    220

Train    622

Machine Learning Model    410

FIG 5

Supervised Training

FIG 7

Unsupervised Training when deployed

FIG 8

FIG 9

Unsupervised Training when deployed

Labelling

FIG 10

FIG 11

FIG 12

800

Processor          802

Memory
806          804

FIG 13

806          808

FIG 14

Europäisches
Patentamt

European
Patent Office

Office européen
des brevets

# EUROPEAN SEARCH REPORT

**Application Number**

EP 24 18 7009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU JASON JSONWU@CMU EDU ET AL: "Automated Class Discovery and One-Shot Interactions for Acoustic Activity Recognition", PROCEEDINGS OF THE GENETIC AND EVOLUTIONARY COMPUTATION CONFERENCE, ACMPUB27, NEW YORK, NY, USA, 21 April 2020 (2020-04-21), pages 1-14, XP058549021, DOI: 10.1145/3313831.3376875 ISBN: 978-1-4503-6111-8 * the whole document * | 1-15 | INV. G06N3/0895 G06N20/00 |
| A | ZHAO JIACHEN ET AL: "Local Domain Adaptation for Cross-Domain Activity Recognition", IEEE TRANSACTIONS ON HUMAN-MACHINE SYSTEMS, IEEE, PISCATAWAY, NJ, USA, vol. 51, no. 1, 9 December 2020 (2020-12-09), pages 12-21, XP011831770, ISSN: 2168-2291, DOI: 10.1109/THMS.2020.3039196 [retrieved on 2021-01-14] * abstract * * Section III * | 1-15 | |
| A | AMINIKHANGHAHI SAMANEH ET AL: "Using change point detection to automate daily activity segmentation", 2017 IEEE INTERNATIONAL CONFERENCE ON PERVASIVE COMPUTING AND COMMUNICATIONS WORKSHOPS (PERCOM WORKSHOPS), IEEE, 13 March 2017 (2017-03-13), pages 262-267, XP033092293, DOI: 10.1109/PERCOMW.2017.7917569 [retrieved on 2017-05-02] * abstract * * Section III * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 27 November 2024 | Malatesta, Lori |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHANG et al.** A Systematic Study of Unsupervised Domain Adaptation for Robust Human-Activity Recognition. *Technologies*, 1-30, https://doi.org/10.1145/3380985